# EUROPÄISCHE PATENTANMELDUNG

(11) **EP 1 180 756 A1**
(43) Veröffentlichungstag der Anmeldung: **20.02.2002**
(21) Anmeldenummer: 00117857.3
(22) Anmeldetag: 18.08.2000
(51) Int. Cl.: G07F 19/00

(54) **Verfahren und Anordnung zur Übertragung eines elektronischen Geldbetrages aus einem Guthabenspeicher**

(71) Anmelder: SIEMENS AKTIENGESELLSCHAFT, 80333 München (DE)
(72) Erfinder: Horn, Michael, 81739 München (DE); Wolf, Hans-Hermann, 81829 München (DE)

(57) **Zusammenfassung**

Verfahren zur Übertragung eines elektronischen Geldbetrages aus einem Guthabenspeicher eines Geldsenders auf ein Konto bzw. in einen Guthabenspeicher eines Geldempfängers über ein Telekommunikations- und Datennetz in Echtzeit, wobei die Übermittlung der erforderlichen Daten unter Bezugnahme auf eine Transaktionsnummer (TAN) erfolgt.

## Beschreibung

Die Erfindung betrifft ein Verfahren sowie eine Anordnung zur Übertragung eines elektronischen Geldbetrages aus einem Guthabenspeicher auf ein Konto bzw. in einen anderen Guthabenspeicher über ein Telekommunikations- und Datennetz.

Das Internet gewinnt - neben der Nutzung als Kommunikationsmittel und Informationsquelle für mittlerweile Hunderte von Millionen Menschen - zunehmend an Bedeutung als Einkaufsquelle. Insbesondere der Handel mit Software, Büchern und Reisen läuft heute bereits zu einem nennenswerten Anteil im Internet ab, zunehmend wird aber auch ein breites Spektrum sonstiger Waren und Dienstleistungen über das Internet bestellt und bezahlt. Die Bezahlung der entsprechenden Leistungen im Internet auf die ursprünglich etablierte und heute noch meist verbreitete Weise erfordert die jeweils gesonderte Eingabe der relevanten Datensätze zumindest bei jedem Geschäftspartner, wenn nicht sogar für die einzelne Transaktion. Diese Zahlungsweise gibt damit dem Geschäftspartner Einblick in sensible persönliche Daten und sogar die Möglichkeit ihrer dauerhaften Speicherung.

Auch für die Abwicklung sonstiger Zahlungsvorgänge im geschäftlichen wie im privaten Bereich hat das Internet inzwischen erhebliche Bedeutung erlangt. Nahezu alle Banken in den Industrieländern bieten als "Electronic Banking" die elektronische Abwicklung der Kontoführung und von Zahlungsvorgängen an.

Gleichwohl erfolgt die Mehrzahl der Zahlungsvorgänge des täglichen Lebens auch heute noch per Bargeld oder durch schriftliche Erteilung von Überweisungs- oder Einzugsaufträgen o. ä. oder bei Kredit- bzw. Scheckkarte. Auf speziellen Gebieten, etwa dem der Mobilfunktechnik, haben auch elektronische Guthaben (sog. "Prepaid-Karten") Bedeutung erlangt, einer breiten Einführung dieses Zahlungsmittels stehen aber erhebliche Hindernisse im Wege.

Insgesamt ist festzustellen, daß beim derzeitigen Stand der Entwicklung eine höchst unübersichtliche Vielzahl von Möglichkeiten der Bezahlung von Waren oder Dienstleistungen besteht, deren Handhabung im täglichen Leben erhebliche Aufmerksamkeit und den Umgang mit den verschiedensten Medien bzw. Eingabemodi erfordert. Das ist lästig und zudem mit vielfältigen Sicherheitsrisiken (Verlust von Daten- bzw. Guthabenträgern, Vergessen von Kontendaten bzw. Authentisierungscodes etc.) verbunden.

Neben dem Internet stellt die Telekommunikation - insbesondere die mobile Telekommunikation - heute ein Gebiet mit rasanter technischer und wirtschaftlicher Entwicklung und eine wesentliche Quelle wirtschaftlichen Wachstums und neuer sozialer Entwicklungen dar. Für einen Großteil der Menschen in den Industrieländern wird das Mobiltelefon ("Handy") mehr und mehr zu einem universellen Kommunikations- und Informations-instrument und auch zunehmend für den Zugriff auf Waren und Dienstleistungen genutzt. Auch diese Entwicklung wird noch durch unzureichende Möglichkeiten für eine sichere und zugleich einfache Bezahlung von über das Handy bestellten Informationen, Waren und Dienstleistungen behindert.

Zwar gibt es Lösungen, die dem Nutzer eines Handys - mit oder ohne Prepaid-Karte - die Autorisierung von Zahlungen ermöglichen, welche anschließend auf an sich konventielle Weise per Lastschriftverfahren oder Kreditkarten-Abbuchung abgewickelt werden. Diese Verfahren setzen jedoch, wie auch die im Internet inzwischen eingebürgerten Zahlungsabwicklungen, die Kreditwürdigkeit des Käufersund die Verfügungsbefugnis über eine Kreditkarte oder ein Girokonto mit Dispositionskredit voraus. Zudem wohnen diesen Verfahren zeitliche Verschiebungen inne, die sich nachteilig auf die Transparenz und Zuverlässigkeit der Gesamtabwicklung auswirken.

Der Erfindung liegt daher die Aufgabe zugrunde, ein Verfahren und eine Anordnung zur vereinfachten Abwicklung von Zahlungsverkehr unter Nutzung eines Datennetzes anzugeben.

Diese Aufgabe wird hinsichtlich ihres Verfahrensaspektes gelöst durch ein Verfahren mit den Merkmalen des Anspruchs 1 und hinsichtlich ihres Vorrichtungsaspektes durch eine Anordnung mit den Merkmalen des Anspruchs 10.

Die Erfindung schließt den wesentlichen Gedanken ein, ein weitgehend universelles Zahlungsverfahren auf der Grundlage eines elektronischen Guthabens (Prepaid-Konto bzw. -Karte) anzugeben, welches für eine Zahlungsabwicklung im sogenannten B2C(Business-2-Consumer)-Bereich wie auch im C2C(Consumer-2-Consumer)-Bereich anwendbar ist, also sowohl den Einkauf in realen und virtuellen Geschäften, die Bezahlung in gastronomischen oder kulturellen Einrichtungen oder an Warenausgabe-automaten etc. als auch die "Übersendung" von Geldbeträgen im privaten Bereich ermöglicht. Sie schließt weiter den Gedanken ein, hierzu die Möglichkeiten eines verknüpften Telekommunikations- und Datennetzes zu nutzen, und zwar insbesondere die Möglichkeit einer Abwicklung in Echtzeit (Real Time) unter Nutzung einer Transaktionsnummer (TAN).

Unter einem elektronischen Guthaben wird hier ein Speicherinhalt eines über ein Telekommunikations- bzw. Datennetz zur Durchführung von Zahlungsverkehr handhabbaren Guthabenspeichers verstanden - grundsätzlich unabhängig davon, ob der Speicher tatsächlich ein vorausbezahltes Guthaben aufweist oder ein Guthabenbetrag erst zu einem späteren Zeitpunkt transferiert wird. In der nachfolgenden Beschreibung und den Patentansprüchen wird der Inhaber des Prepaid-Guthabens, der einen Geldbetrag übertragen möchte und in einem (realen oder virtuellen) Geschäft als Käufer und in einer gastronomischen Einrichtung als Gast in Erscheinung tritt, allgemein als "Geldsender" bezeichnet. Der Empfänger des zu übertragenden Geldbetrages, bei dem es sich im täglichen Leben zumeist um den Inhaber bzw. Betreiber eines Geschäftes oder einer gastronomischen oder kulturellen Einrichtung o. ä. handeln wird, wird nachfolgend allgemein "Geldempfänger" bezeichnet. Geldempfänger und Geldsender können im übrigen auch Applikationen sein.

Kernstück der vorgeschlagenen Anordnung und des vorgeschlagenen Verfahrens ist ein Transaktions-Server, der auf eine Transaktions-Datenbasis zugreift, in der die für eine Übertragung von Prepaid-Guthaben relevanten Daten gespeichert sind. Initiiert wird der Übertragungsvorgang durch einen Anruf des Geldsenders oder des Geldempfängers bei dem Transaktions-Server, und zwar unter einer Service-Rufnummer oder einer Sondernummer eines Dienstes (z. B. 09XX), weitere Verbindungen werden durch den Transaktions-Server selbst hergestellt.

Der zu übertragende Geldbetrag wird seitens des Geldsenders oder -empfängers an dessen jeweiligem Endgerät bzw. einer mit diesem verbundenen Kasse oder anderen Eingabeeinrichtung eingegeben. Dies kann auch in der zweiten Phase eines Ablaufes geschehen, bei dem zunächst die Rufnummer des Servers eingegeben und angewählt und der Geldsender oder -empfänger über eine Ansage oder Menüführung aufgefordert wird, den Geldbetrag einzugeben. Auf diese Aufforderung hin nimmt er dann die relevante Eingabe vor.

Im Falle der Nutzung einer Sondernummer zur Herstellung einer Verbindung mit dem Transaktions-Server wird über einen sogenannten Originating-Trigger im Switch des Anrufers (Geldempfänger oder Geldsender) die Sondernummer erkannt, der Server - z. B. ein Dienststeuerzentrum (SCP) eines intelligenten Netzes - angesteuert und die angeforderte Prepaid-Shopping-Anwendung aktiviert.

Die Nutzung dieser Anwendung erfolgt vorzugsweise im Rahmen einer Subskription durch den Geldempfänger. Hierbei wird der Geldempfänger im Normalfall ein Bankkonto angeben, auf das das im Rahmen der Prepaid-Shopping-Anwendung in seinen elektronischen Guthabenspeicher übertragene Geld letztlich transferiert wird. Weiterhin kann die Transaktions-Währung spezifiziert werden. Für den Geldsender besteht keine Notwendigkeit, sich für das Geldübertragungsverfahren zu subskribieren. Aus Sicherheitsgründen ist jedoch bevorzugt die Autorisierung der Geldübertragung unter Nutzung vorbestimmter Authentisierungsmittel vorgesehen; siehe dazu weiter unten.

Die bevorzugte Subskription des Dienstes durch den Geldempfänger ist ebenfalls nicht zwingend notwendig. Ohne formelle Subskription kann allerdings keine Bankverbindung angegeben werden, so daß der in den elektronischen Guthabenspeicher ("Prepaid-Konto") übertragene Geldbetrag nicht weiter transferiert werden kann. Da zudem keine Währung angegeben werden kann, beschränkt sich die Anwendung im Normalfall auf die im Land des Geldsenders oder -empfängers gültige Währung. In dieser Ausgestaltung eignet sich das Verfahren insbesondere für den Geldtransfer zwischen Privatleuten ("C2C").

Nach Herstellung der Verbindung bzw. Verbindungen zum Transaktions-Server können die erforderlichen Ein- und Ausgaben zum einen über eine Sprachverbindung mit Spracheingabe oder DTMF-Eingabe und Sprachausgabe und zum anderen über den Austausch von Textnachrichten (insbesondere SMS oder E-Mail) oder auch mittels einer Kombination aus diesen vorgenommen werden.

Mit dem oben erwähnten Subskriptionsvorgang wird ein den Geldempfänger betreffender Datensatz in der Transaktions-Datenbasis ("Shopping-Datenbank") abgelegt. Das Konto des Geldempfängers muß zur Verwaltung elektronischer Guthaben geeignet sein; es kann sich hierbei insbesondere ebenfalls um ein Prepaid-Konto handeln. Der Geldempfänger kann mehrere Telefonnummern und auch mehrere Zielkonten für die Geldübertragung benutzen, wobei in diesem Fall natürlich alle einzusetzenden Telefonnummern und Konto-Identifikatoren aller Konten in der Shopping-Datenbank zu hinterlegen sind. (Mit dem Begriff "Konto-Iden-tifikator" wird nachfolgend die Gesamtheit aus einer Kontonummer bzw. einem Kontencode und der gegebenenfalls benötigten Server-Adresse eines externen Servers verstanden, auf dem das Konto verwaltet wird.) Neben den erwähnten Daten umfaßt der in der Transaktions-Datenbasis gespeicherte Geldempfänger-Datensatz zweckmäßigerweise auch einen Namen bzw. Firmennamen.

Neben den Informationen zum Geldempfänger enthält die Shopping-Datenbank bevorzugt auch die zur Durchführung der Geldübertragung erforderlichen Informationen bezüglich des Geldsenders. Dieser Geldsender-Datensatz enthält zweckmäßigerweise die Kontonummer seines Prepaid-Kontos und erforderlichenfalls die Serveradresse eines externen Servers, auf dem das Prepaid-Guthaben verwaltet wird (auch hier nachfolgend gelegentlich als "Konto-Identifikator" bezeichnet), vorteilhafterweise auch den Server- und Betreibernamen und schließlich einen Authentisierungsdatensatz zur mindestens optionalen fallweisen Authentisierung größerer Geldtransfers. Als "Adresse" bzw. "Schlüssel" für diesen Datensatz dient zweckmäßigerweise die Geldsender-Rufnummer.

Der Geldsender-Datensatz kann auch in einer separaten Prepaid-Datenbasis hinterlegt sein.

In einer bevorzugten Verfahrensdurchführung dient eine die einzelne Transaktion spezifizierende Transaktionsnummer als zentraler Bezugspunkt für die einzelnen Verfahrensschritte. Diese wird vom Transaktions-Server als Zufallszahl erzeugt und ist für eine voreingestellte Zeit, innerhalb derer der Geldübertragungsvorgang abgeschlossen sein sollte, gültig.

Einzelheiten der Anwendung der Transaktionsnummer sind weiter unten beschrieben.

Eine wesentliche Sicherheitskomponente stellt der bereits erwähnte Authentisierungsdatensatz innerhalb des Geldsender-Datensatzes dar. Dieser umfaßt insbesondere einen Authentisierungscode (PIN o. ä.) und/oder biometrische Daten des Geldsenders (z. B. Papillarlinien- oder Retinamuster), der bzw. die zur fallweisen Autorisierung von Geldübertragungen genutzt werden. Dieser Code bzw. diese Daten werden am Endgerät des Geldsenders oder an einem diesem zugeordneten Eingabegerät eingegeben, zum Transaktions-Server übermittelt und dort mit den entsprechenden hinterlegten Daten verglichen. Im Ergebnis des Vergleiches wird die Transaktion freigegeben oder gesperrt.

Die erwähnten Autorisierungsschritte werden in einer bevorzugten Verfahrensdurchführung bei Kleinstbeträgen nicht ausgeführt, sondern nur bei einen vorbestimmten Schwellwert übersteigenden Geldbeträgen. Dieser Schwellwert ist vorteilhafterweise durch den Dienstbetreiber oder den Geldsender selbst einstell- bzw. änderbar.

Die vorgeschlagene Lösung umfaßt die Funktionsblöcke (1) Start des Geldübertragungsverfahrens, (2) Abbuchung beim Geldsender und (3) Aufbuchung beim Geldempfänger. Diese Funktionsblöcke können auf ein und demselben oder verschiedenen Servern ablaufen, für den bzw. die zusammenfassend der Begriff "Transaktions-Server" steht. Der oder die Server kann bzw. können zentral bei einem Dienstbetreiber oder in mehreren Hardware-Implementierungen bei diesem oder auch bei mehreren Dienstbetreibern existieren. Die Prepaid-Shopping-Anwendung hat - wie oben bereits erwähnt - Zugriff auf eine "Shopping-Datenbank", die (je nach konkretem Netz- und Anwendungskonzept) ebenfalls zentral an einer Stelle, verteilt an mehreren Stellen oder auch in mehreren Kopien an verschiedenen Stellen vorliegen kann.

Verfahren und Anordnung gestalten sich am einfachsten, wenn das Prepaid-Guthaben des Geldsenders, das Zielkonto des Geldempfängers und die Prepaid-Shopping-Anwendung selbst bei ein und demselben Dienstbetreiber verwaltet bzw. betrieben werden. Ist dies nicht der Fall, muß ein (als solches bekanntes) Clearing über die Geldübertragung stattfinden. Für diesen Vorgang können die beim Ab- und Aufbuchungsvorgang erstellten Dokumentationen, insbesondere als sogenannte Log-Records, eingesetzt werden.

Das vorgeschlagene Verfahren bietet als Echtzeitverfahren eine gegenüber bekannten Zahlungsabwicklungsverfahren verbesserte Transparenz und Zuverlässigkeit und ist insbesondere auch von Personen nutzbar, denen kein Kreditrahmen gewährt wird. Der Nutzer muß lediglich über ein vorausbezahltes Guthaben verfügen, das eine für die vorgesehene Geldübertragung ausreichende Deckung gewährleistet.

Das vorgeschlagene System erbringt zudem den wesentlichen Vorteil, daß das auf einem Prepaidkonto vorhandene elektronische Geld nicht nur für die Bezahlung einer eng spezifizierten Dienstleistung (speziell von Telefongesprächen), sondern in vielfältiger Weise für die Bezahlung von Waren, Dienstleistungen, Informationen etc. in realen wie auch in virtuellen Verkaufseinrichtungen aller Art genutzt werden kann. Über die Vorausbezahlung des Guthabens hat der Nutzer eine strenge Kostenkontrolle, und eine unbeabsichtigte Verschuldung ist prinzipiell ausgeschlossen. Damit ist dieses Verfahren besonders vorteilhaft auch für Minderjährige (oder auch für nicht mehr im vollem Besitz ihrer geistigen Kräfte befindliche ältere Menschen) einsetzbar, für die es bislang keine vergleichbare Anwendung gibt. Für die Bezahlung von Waren oder Dienstleistungen verschiedener Anbieter sind nicht länger mehrere Prepaid-Karten oder -Endgeräte erforderlich, sondern nur die Speicherung einer einzigen Prepaid-Rufnummer.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Figur 1 ein stark vereinfachtes Funktions-Blockschaltbild einer ersten Ausführungsform der erfindungsgemäßen Anordnung,
Figur 2 ein stark vereinfachtes Funktions-Blockschaltbild einer zweiten Ausführungsform,
Figur 3 ein stark vereinfachtes Funktions-Blockschaltbild einer dritten Ausführungsform und

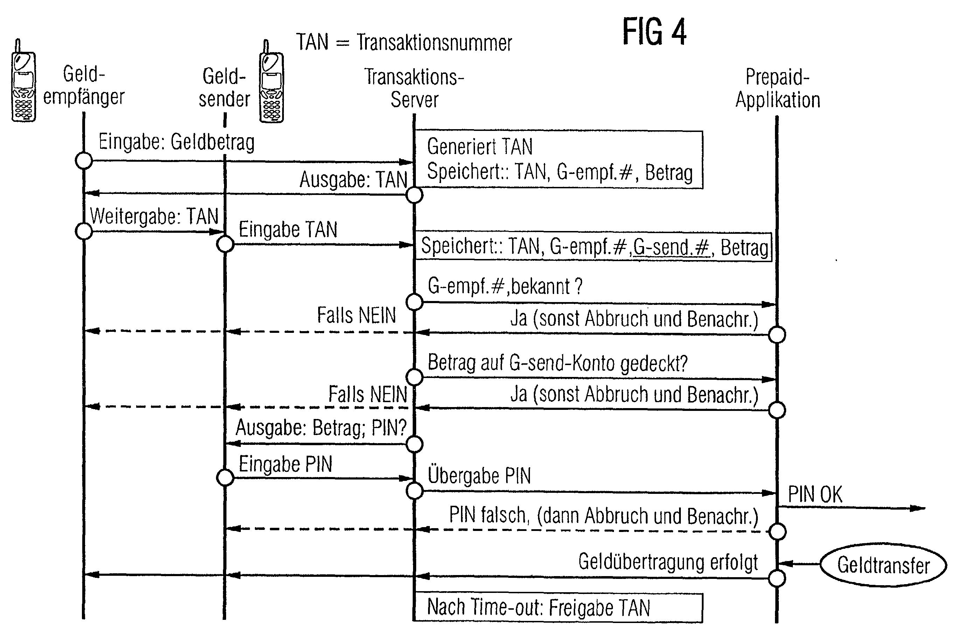

Figur 4 eine schematische Darstellung wesentlicher Schritte der vorgeschlagenen Anwendung bei der Anordnung nach Fig. 1.

Die Figuren sind aufgrund ihrer Beschriftung im wesentlichen selbsterklärend, so daß nachfolgend keine detaillierte Figurenbeschreibung gegeben wird.

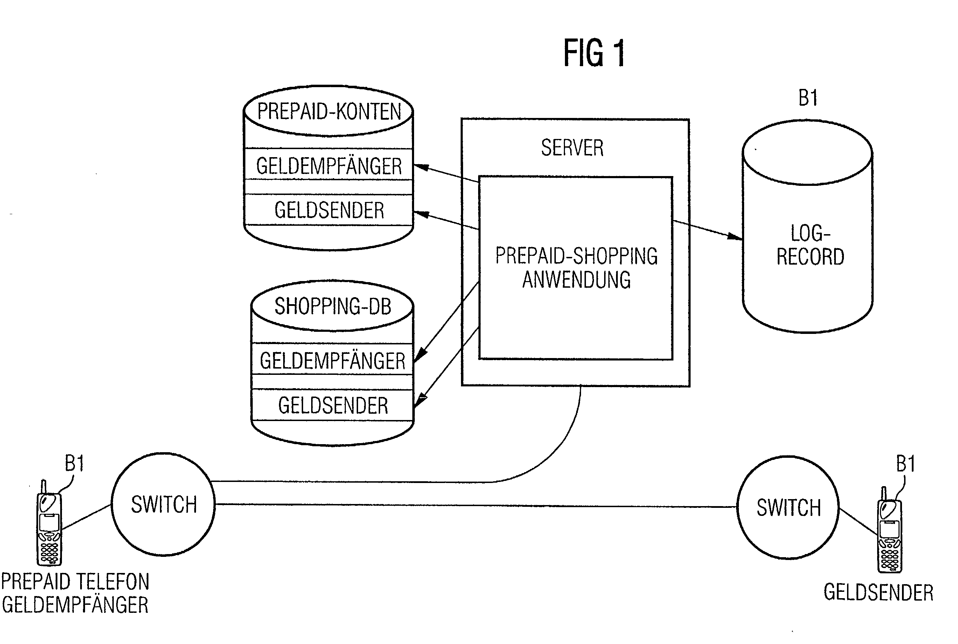

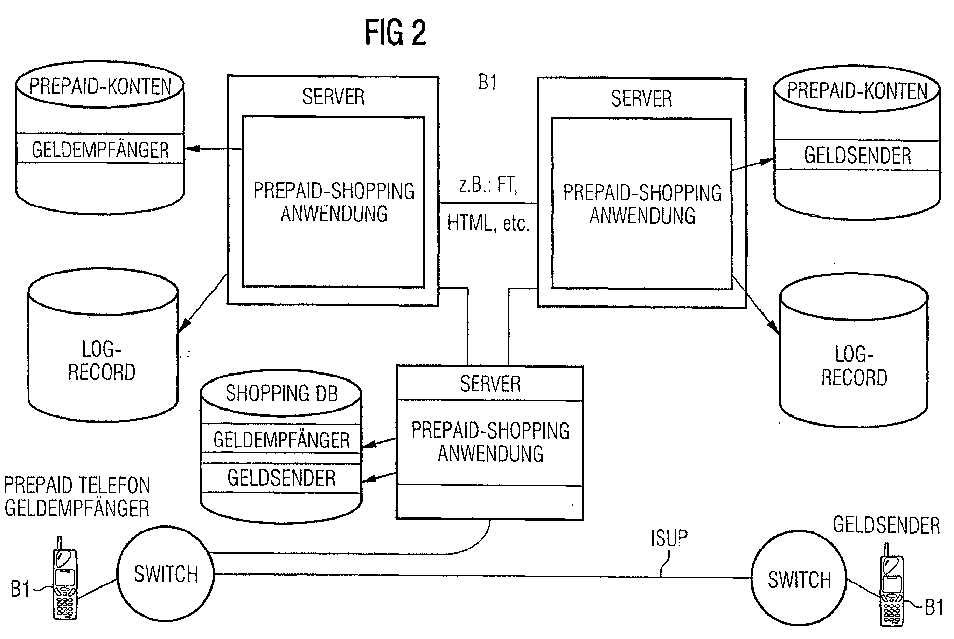

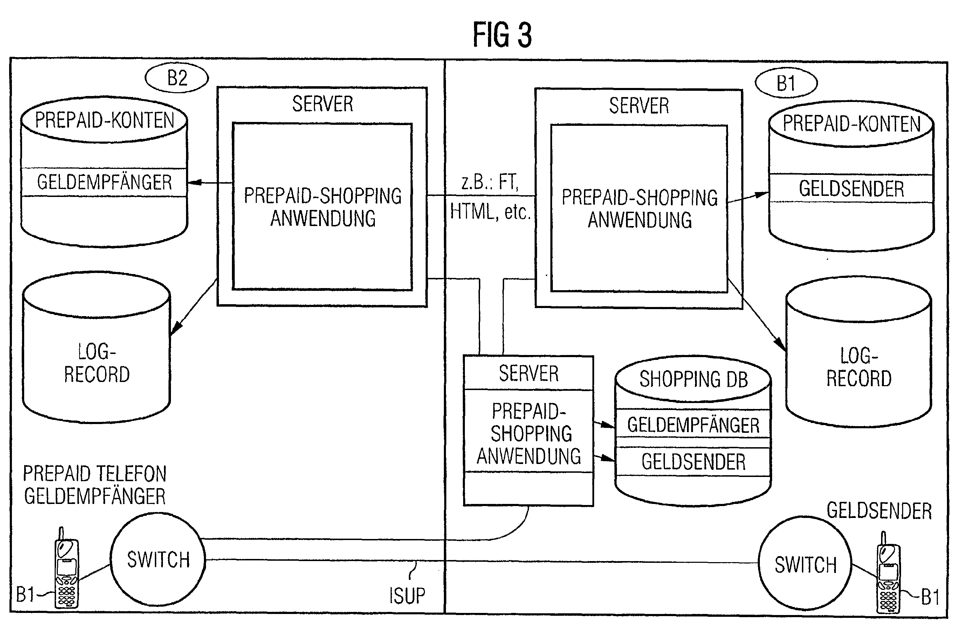

Es wird darauf hingewiesen, daß in Fig. 1 davon ausgegangen wird, daß die Prepaid-Shopping-Anwendung auf demselben Server läuft, auf dem auch Prepaid-Konten des Geldempfängers und Geldsenders geführt werden. In Fig. 2 ist dagegen der Fall dargestellt, daß Prepaid-Konten des Geldsenders und Geldempfängers auf einem anderen Server (desselben Betreibers B1) als demjenigen verwaltet werden auf dem die Prepaid-Shopping-Anwendung läuft. Fig. 3 zeigt den Fall, daß die Prepaid-Shopping-Anwendung und durch diese gehandhabte Prepaid-Konten auf unterschiedlichen Servern verschiedener Betreiber B1, B2 verwaltet werden. In den Figuren 1 bis 3 ist der Fall dargestellt, daß der Transaktions-Server SERVER vom Endgerät des Geldempfängers angerufen wird; modifiziert man sie durch Ersetzung der Verbindung zwischen dem Switch des Geldempfängers und dem Server durch eine Verbindung zwischen dem Switch des Geldsenders und dem Server, zeigen sie den Fall eines Anrufes beim Transaktions-Server durch den Geldsender.

Der Geldübertragungsvorgang wird durch einen Anruf des Geldempfängers oder Geldsenders bei dem Transaktions-Server SERVER eingeleitet. Hierbei wird im Anschluß an eine Server-Rufnummer - von dieser durch einen Stern (*) abgetrennt - der zu übertragende Geldbetrag in der relevanten Währung als unstrukturierte Ziffernfolge am Endgerät des Geldsenders oder Geldempfängers eingegeben. In einer anderen Variante wird eine direkte Rufnummer des Transaktions-Servers eingegeben, um dort die Prepaid-Shopping-Anwendung zu starten. Hierzu wird insbesondere die Tastatur des Endgerätes benutzt; grundsätzlich kann im Rahmen einer entsprechend ausgebildeten Menüführung aber auch eine Spracheingabe erfolgen. Sofern die Eingabe des Preises nicht im Zusammenhang mit dem Wahlvorgang erfolgt ist, legt die Prepaid-Shopping-Anwendung eine Ansage an, mit der der Anrufende zur Eingabe des Preises aufgefordert wird. Daraufhin gibt der Anrufer dann den Preis ein.

Nach der Eingabe erzeugt der Transaktions-Server eine Zufallszahl, die als Transaktionsnummer TAN für die Geldübertragung dient. Der Zahlenbereich, aus dem diese Zufallszahl gewonnen wird, sollte so groß sein, daß innerhalb des für die Transaktion veranschlagten Zeitintervalls in einer Domäne (z. B. einem Land) eines Betreibers für jede Transaktion eine TAN zur Verfügung steht. (Sollte ausnahmsweise der Fall auftreten, daß keine Zufallszahlen mehr zur Verfügung stehen, müssen weitere Geldübertragungen solange aufgeschoben werden, bis durch einen Time-Out wieder eine TAN frei wird.)

Mit der TAN als Schlüssel bzw. Adresse wird der vom Anrufer (Geldsender oder Geldempfänger) eingegebene Geldbetrag und seine automatisch oder manuell übermittelte Rufnummer in der Transaktions-Datenbank hinterlegt. Anschließend wird die TAN an den Anrufer übermittelt. Die Verbindung zwischen dem Anrufer und dem Transaktions-Server wird danach abgebaut.

Dann wird die TAN dem Partner der Geldübertragung auf einem anderen Wege mitgeteilt, z. B. durch optische Anzeige auf dem Display einer Kasse beim Geldempfänger oder Geldsender. Daraufhin ruft dieser den Transaktions-Server an. Dies kann wiederum durch Anwahl einer direkten Server-Rufnummer oder die bereits erwähnte Sondernummer geschehen. Im ersten Fall legt die Prepaid-Shopping-Anwendung eine Ansage an, in der zur Eingabe der TAN aufgefordert wird. Im letzteren Fall kann die TAN im Anschluß an die Sondernummer - eventuell mit Stern abgetrennt - eingegeben werden. Auch hier wird wieder über einen Originating-Trigger im Switch des Geldsenders bzw. -empfängers die Sondernummer erkannt, der Transaktions-Server angesteuert und die Prepaid-Shopping-Anwendung auf diesem aktiviert.

Nachdem die Eingabe der TAN erfolgt ist, wird die Transaktions-Datenbasis mit der TAN adressiert und die - wiederum automatisch oder manuell übertragene - Rufnummer des Anrufers (Geldsender bzw. -empfänger) in den Datensatz eingetragen.

Die Prepaid-Shopping-Anwendung auf dem Transaktions-Server übergibt nun die für die Geldübertragung erforderlichen Daten (insbesondere die Rufnummern von Geldempfänger und Geldsender und den Geldbetrag) an eine Prepaid-Anwendung auf einem entsprechenden Server. Dies kann der Transaktions-Server selbst (Fig. 1) oder mindestens ein Server desselben Betreibers (Fig. 2) oder mindestens ein Server eines anderen Betreibers (Fig. 3) sein. Die Anwendungen können auch verteilt in Bausteinen auf verschiedenen Servern ablaufen.

Nach der Übermittlung der Daten, mit der das Geldübertragungsverfahren gestartet ist, folgt zunächst ein Prüfungsvorgang im Hinblick darauf, ob der Datenträger gültig und der Betrag auf dem Prepaid-Konto des Geldsenders für den vorgesehenen Übertragungsvorgang ausreichend ist. Ist beides der Fall, wird der Geldsender aufgefordert, die Abbuchung des zu übertragenden Geldbetrages durch Eingabe seiner PIN zu autorisieren.

Im Rahmen des Prüfungsvorganges greift die Prepaid-Shopping-Anwendung auf die Shopping-Datenbank zu und liest den Geldempfänger-Datensatz und den Geldsender-Datensatz mit den darin enthaltenden Informationen, auf welchem Server bzw. welchen Servern (und bei welchem Betreiber bzw. welchen Betreibern) sich die Konten des Geldempfängers und Geldsenders befinden. Der Server des Geldsenders wird identifiziert, und es wird, falls es sich um einen anderen Server handelt als denjenigen, auf dem die Prepaid-Shopping-Anwendung läuft, eine Echtzeitverbindung zu einer auf diesem fremden Server laufenden Prepaid-Shopping-Anwendung aufgebaut.

An die Prepaid-Shopping-Anwendung auf dem Server des Geldsenders wird eine Aufforderung zur Prüfung übermittelt, ob das elektronische Guthaben auf dem Prepaid-Konto des Geldsenders für die vorgesehene Geldübertragung ausreicht. Ist dies nicht der Fall, wird die Übertragung mit einem entsprechenden Hinweissignal an das Endgerät des Geldempfängers und/oder Geldsenders abgebrochen. Ist der zu übertragende Geldbetrag gedeckt, wird er auf dem Prepaid-Konto des Geldsenders reserviert.

Anschließend erfolgt die erwähnte Autorisierung per Eingabe der PIN durch den Geldsender. Die eingegebene PIN wird mit der im Geldsender-Datensatz hinterlegten PIN verglichen. Ist sie gültig, wird der Abbuchungsvorgang eingeleitet. Ist sie ungültig, wird die Transaktion an dieser Stelle abgebrochen und wiederum ein entsprechendes Hinweissignal übermittelt.

Es folgt die Abbuchung des zu übertragenden Geldbetrages vom Prepaid-Konto des Geldsenders. Dieser Vorgang ist zeitkritisch und erfolgt in Echtzeit. Befindet sich das Prepaid-Konto des Geldsenders auf dem gleichen Server wie die Prepaid-Shopping-Applikation, kann das Guthaben sofort (in Echtzeit) um den zu übertragenden Geldbetrag reduziert werden. Befindet sich das Konto auf einem fremden Server, muß die Abbuchungs-anforderung an die dortige Prepaid-Shopping-Anwendung gestellt werden, und die Abbuchung erfolgt unter deren Regime. In jedem Falle wird über den Abbuchungsvorgang ein Log-Record erstellt und der Geldempfänger und/oder Geldsender über das Kassensystem oder einen Anruf oder per SMS o. ä. über die Ausführung der Abbuchung informiert.

Es folgt die Aufbuchung des zu übertragenden Geldbetrages auf das Konto des Geldempfängers, bei dem es sich um ein Prepaid-Konto, ein Realtime-Account oder ein normales Bank-Girokonto handeln kann. Dieser Vorgang ist nicht zeitkritisch, muß aber mit höchster Zuverlässigkeit erfolgen. Auch hierbei sind die oben für das Abbuchen erwähnten Varianten zu unterscheidenje nachdem, ob das Konto auf einem fremden Server geführt wird oder nicht. Auch für den Aufbuchungsvorgang wird ein Log-Record erstellt.

Die Ausführung der Erfindung ist nicht auf die erwähnten Beispiele, Varianten und Aspekte beschränkt, sondern im Rahmen der Ansprüche ebenso in einer Vielzahl von Abwandlungen möglich, die im Rahmen fachgemäßen Handelns liegen. Insbesondere sind die oben beschriebenen Verfahrensschritte auch in anderer Reihenfolge möglich.

Um die Anzahl der Eingabeschritte zu reduzieren, können die Vorgänge der Eingabe der TAN durch den Geldsender und der Autorisierung des Geldübertragungsvorganges mittels PIN auch zu einem Schritt kombiniert werden. Von den verschiedenen Möglichkeiten hierfür wird auf zwei hingewiesen: Bei der ersten gibt der Geldsender im Vertrauen darauf, daß der Geldempfänger den zu übertragenden Geldbetrag korrekt eingegeben hat, unmittelbar nach Eingabe der TAN auch seine PIN ein. Der Geldbetrag wird ohne weitere Prüfung zunächst von seinem Prepaid-Konto abgebucht. Zur Bestätigung wird dem Geldsender dann der übertragene Geldbetrag genannt. Ist er falsch, kann der Gelsender durch erneute Eingabe der TAN und eines Korrekturcodes (beispielsweise des Preises "0") die Geldübertragung stornieren. Dies muß innerhalb der Gültigkeitsdauer der TAN erfolgen und führt zur Zurückbuchung des Geldbetrages. In der zweiten Variante übermittelt der Geldsender - jeweils durch einen Trenner untergliedert - die TAN, den Geldbetrag und die PIN. Falls das spezielle System auch eine Geldbetrags-Eingabe durch den Geldempfänger vorsieht, wird die Transaktion nur bei Übereinstimmung durchgeführt, bei Nichtübereinstimmung hingegen unter entsprechender Benachrichtigung des Geldempfängers und Geldsenders abgebrochen.

Spezielle Vorteile der beanspruchten Lösung bestehen darin, daß der Geldsender anonym bleiben kann und keine langen Rufnummern zwischen Geldsender, Geldempfänger und Transaktions-Server ausgetauscht werden müssen, sondern lediglich die kurze TAN. Damit wird die Dauer des Transaktionsvorganges verkürzt und die Fehlerrate bei der Eingabe verringert. Der Geldempfänger oder Geldsender muß bei jeder Transaktion nur einmal den Transaktions-Server anrufen und den Geldbetrag eingeben und gewinnt Zeit für andere Tätigkeiten.

## Patentansprüche

1. Verfahren zur Übertragung eines elektronischen Geldbetrages aus einem Guthabenspeicher eines Geldsenders, der insbesondere ein vorausbezahltes Guthaben aufweist, auf ein Konto bzw. in einen Guthabenspeicher eines Geldempfängers über ein Telekommunikations- und Datennetz in Echtzeit, mit den Schritten:
- Speicherung eines Geldempfänger-Datensatzes, der mindestens eine Rufnummer eines Endgerätes des Geldempfängers im Telekommunikationsnetz und einen Konto-Identifikator des Kontos bzw. Guthabenspeichers des Geldempfängers umfaßt, in einer Transaktions-Datenbasis und/oder einer Guthabenverwaltungs-Datenbasis, wobei mindestens die Rufnummer in der Transaktions-Datenbasis gespeichert wird, insbesondere im Rahmen einer Subskription eines Geldübertragungs-Dienstes durch den Geldempfänger bei einem Dienstbetreiber,
- Speicherung eines Geldsender-Datensatzes, der mindestens eine Rufnummer eines Endgerätes und einen Konto-Identifikator des Guthabenspeichers und wahlweise einen Authentisierungsdatensatz des Geldsenders umfaßt, in der Transaktions-Datenbasis und/oder einer Guthabenverwaltungs-Datenbasis,
- Aufbau einer Verbindung zwischen dem Endgerät des Geldempfängers oder Geldsenders und einem Transaktions-Server des Dienstbetreibers unter Nutzung einer Server-Rufnummer oder Sondernummer, wobei durch den Transaktions-Server für den Übertragungsvorgang eine eindeutige Transaktionsnummer generiert und dem Geldempfänger-Datensatz und/oder dem Geldsender-Datensatz als Adresse zugeordnet wird und die Transaktionsnummer an den jeweiligen Anrufer übermittelt sowie durch den Partner der Geldübertragung, d. h. den Geldsender bzw. Geldempfänger, in einer Antwort an den Transaktions-Server zusammen mit weiteren Daten, insbesondere Authentisierungsdaten, zurückübertragen wird,
- Eingabe des zu übertragenden Geldbetrages am Endgerät des Geldempfängers oder Geldsenders und Übermittlung an den Transaktions-Server,
- Auslesen aus der Transaktions-Datenbasis und Auswertung des Geldempfänger-Datensatzes und wahlweise des Geldsender-Datensatzes durch den Transaktions-Server, einschließlich Herstellung optional erforderlicher Datenverbindung(en) zu einer oder mehreren externen Anwendung(en),
- Prüfung der Deckung des Geldbetrages im Geldsender-Guthabenspeicher und Reservierung des Geldbetrages im Deckungsfall bzw. Abbruch mit Signalisierung im Unterdeckungsfall,
- Abbuchung des Geldbetrages aus dem Geldsender-Guthabenspeicher und Dokumentation derselben,
- Aufbuchung des Geldbetrages auf das Geldempfänger-Konto bzw. den Geldempfänger-Guthabenspeicher und Dokumentation derselben,
- Übermittlung einer Information über die Ab- und/oder die Aufbuchung an das Endgerät des Geldempfängers und/oder Geldsenders.

2. Verfahren nach Anspruch 1,
**dadurch gekennzeichnet, daß**
der Transaktionsnummer eine vorbestimmte Gültigkeits-Zeitdauer zugeordnet wird.

3. Verfahren nach Anspruch 1 oder 2,
**dadurch gekennzeichnet, daß**
der zu übertragende Geldbetrag im Zusammenhang mit der Server-Rufnummer eingegeben wird.

4. Verfahren nach Anspruch 1 oder 2,
**dadurch gekennzeichnet, daß**
- durch den Transaktions-Server eine Aufforderung zur Eingabe des zu übertragenden Geldbetrages an den Geldsender und/oder Geldempfänger generiert und übermittelt und am Endgerät des Geldsenders und/oder Geldempfängers ausgegeben und
- in Reaktion auf diese Aufforderung der Geldbetrag am jeweiligen Endgerät eingegeben wird.

5. Verfahren nach einem der vorangehenden Ansprüche,
**dadurch gekennzeichnet, daß**
der Authentisierungsdatensatz im Geldsender-Datensatz einen Authentisierungscode oder biometrische Daten des Geldsenders umfaßt und vor dem Schritt der Abbuchung Schritte zur Autorisierung derselben ausgeführt werden, nämlich die Schritte:
- Eingabe des Authentisierungscodes oder der biometrischen Daten durch den Geldsender an seinem Endgerät,
- Übermittlung derselben zum Transaktions-Server und
- Vergleich der übermittelten mit den im Geldsender-Datensatz vorliegenden Daten und Ausgabe eines Abbuchungs-Freigabesignals bei Übereinstimmung bzw. eines Abbuchungs-Sperrsignals bei Nichtübereinstimmung.

6. Verfahren nach Anspruch 5,
**dadurch gekennzeichnet, daß**
die Schritte zur Autorisierung bei einem einen vorbestimmten Schwellwert übersteigenden Geldbetrag ausgeführt werden, welcher insbesondere durch den Dienstbetreiber oder den Geldsender einstellbar ist.

7. Verfahren nach einem der vorangehenden Ansprüche,
**gekennzeichnet durch**
die Ausführung unter Herstellung einer Datenverbindung zu mindestens einem externen Server, auf dem der Geldsender-Guthabenspeicher und/oder das Geldempfänger-Konto bzw. der Geldempfänger-Guthabenspeicher verwaltet werden, wobei der Konto-Identifikator des Geldempfänger-Datensatzes und/oder der Konto-Identifikator des Geldsender-Datensatzes eine Serveradresse oder -rufnummer umfaßt und der Transaktions-Server sich mit dieser bzw. diesen nach dem Schritt des Auslesens des Geldempfänger-Datensatzes und des Geldsender-Datensatzes zur Ausführung der nachfolgenden Schritte verbindet.

8. Verfahren nach einem der vorangehenden Ansprüche,
**dadurch gekennzeichnet, daß**
die Subskription des Geldempfängers beim Dienstbetreiber mit einer Mehrzahl von Konten und/oder Rufnummern erfolgt, wobei insbesondere die Anzahl der Konten kleiner als die der Rufnummern ist, und wobei alle entsprechenden Konto-Identifikatoren und die Rufnummern im Geldempfänger-Datensatz gespeichert werden.

9. Verfahren nach einem der vorangehenden Ansprüche,
**dadurch gekennzeichnet, daß**
die Transaktionsnummer auf dem Endgerät des Anrufers oder einem mit diesem verbundenen Datenverarbeitungsgerät bzw. einer Kasse optisch oder akustisch angezeigt wird.

10. Anordnung zur Übertragung eines elektronischen Geldbetrages aus einem Guthabenspeicher eines Geldsenders, der insbesondere ein vorausbezahltes Guthaben aufweist, auf ein Konto bzw. in einen Guthabenspeicher eines Geldempfängers über ein Telekommunikations- und Datennetz in Echtzeit, insbesondere zur Durchführung des Verfahrens nach einem der vorangehenden Ansprüche, welche aufweist:
- mindestens einen Kontoführungs-Server mit einem Geldsender-Guthabenspeicher und einem Geldempfänger-Konto- bzw. -Guthabenspeicher,
- ein an das Telekommunikations- und Datennetz angeschlossenes Endgerät des Geldempfängers,
- ein an das Telekommunikations- und Datennetz angeschlossenes Endgerät des Geldsenders,
- eine Transaktions-Datenbasis eines Dienstbetreibers, in der ein Geldempfänger-Datensatz, der die Transaktions-Rufnummer des Endgerätes des Geldempfängers und/oder einen Konto-Iden-tifikator des Kontos bzw. Guthabenspeichers umfaßt, und ein Geldsender-Datensatz gespeichert sind, der die Rufnummer eines Endgerätes des Geldsenders und/oder einen Konto-Identifikator des Guthabenspeichers und wahlweise einen Authentisierungsdatensatz umfaßt, und
- einen Transaktions-Server, der mit der Transaktions-Datenbasis verbunden und über eine Server-Rufnummer oder Sondernummer mit den Endgeräten des Geldsenders und/oder Geldempfängers sowie über eine Datenverbindung mit dem Kontoführungs-Server oder den Kontoführungs-Servern verbindbar oder mit letzterem bzw. letzteren integral ausgeführt ist,
zum Auslesen und zur Auswertung des Geldempfänger-Datensatzes und des Geldsender-Datensatzes aus der Transaktions-Datenbasis bzw. vom Kontoführungs-Server oder den Kontoführungs-Servern sowie zur Herstellung optional erforderlicher Datenverbindung(en) zu einer oder mehreren externen Anwendung(en) und zur Steuerung einer Deckungsprüfung im Geldsender-Guthabenspeicher sowie einer Abbuchung von diesem und einer Aufbuchung auf das Geldempfänger-Konto bzw. den Geldempfänger-Guthabenspeicher, wobei der Transaktions-Server Zufallsgeneratormittel zur Erzeugung einer Transaktionsnummer zur eindeutigen Kennzeichnung eines Geldübertragungsvorganges und Verknüpfungsmittel zur Zuordnung der Transaktionsnummer zum Geldempfänger-Datensatz und/oder Geldsender-Datensatz in der Transaktions-Datenbasis aufweist.

11. Anordnung nach Anspruch 10,
**dadurch gekennzeichnet, daß**
der Transaktions-Server Zeitgebermittel zur Festlegung einer Gültigkeitsdauer der Transaktionsnummer aufweist, die bei deren Erzeugung gestartet werden.

12. Anordnung nach Anspruch 10 oder 11,
**dadurch gekennzeichnet, daß**
die Transaktions-Datenbasis und der Geldsender-Guthabenspeicher und/oder der Geldempfänger-Guthabenspeicher auf dem Transaktions-Server implementiert sind.

13. Anordnung nach einem der Ansprüche 10 bis 12,
**dadurch gekennzeichnet, daß**
der Transaktions-Server Mittel zur Dokumentierung eines Abbuchungsvorganges und eines Aufbuchungsvorganges, insbesondere als Log-Record, aufweist.

14. Anordnung nach einem der Ansprüche 10 bis 13,
**dadurch gekennzeichnet, daß**
dem Transaktions-Server Telekommunikationsmittel zur Signalisierung eines Transaktionsabbruches oder einer Abbuchung und/ oder einer Aufbuchung an das Endgerät des Geldsenders und/ oder des Geldempfängers zugeordnet sind.

15. Anordnung nach einem der Ansprüche 10 bis 14,
**dadurch gekennzeichnet, daß**
das Telekommunikations- und Datennetz ein Mobilfunknetz umfaßt, wobei das Endgerät des Geldsenders und/oder das Endgerät des Geldempfängers als Mobilfunk-Endgerät oder mit einem Mobilfunkteil ausgerüstetes Datenverarbeitungsgerät ausgebildet ist und dem Transaktions-Server ein Mobilfunk-Endgerät zugeordnet ist.

16. Anordnung nach einem der Ansprüche 10 bis 15,
**dadurch gekennzeichnet, daß**
das Endgerät des Geldsenders und/oder des Endgerät des Geldempfängers mit einer Anzeigeeinrichtung zum Anzeigen der Transaktionsnummer ausgestattet oder über eine drahtgebundene oder drahtlose Schnittstelle, insbesondere eine Infrarot- oder Bluetooth-Schnittstelle, mit einem eine Anzeigeeinheit aufweisenden Gerät verbunden ist.
